# EUROPEAN PATENT APPLICATION

(11) **EP 4 851 315 A1**
(43) Date of publication of application: **09.12.2026**
(21) Application number: 24922063.3
(22) Date of filing: 27.08.2024
(51) Int. Cl.: C22B 11/00, B01J 20/22, C22B 3/16, C22B 3/24, C22B 7/00

(54) **METHOD FOR RECOVERING NOBLE METAL AND LIQUID COMPOSITION FOR ADSORPTION**

(30) Priority: 30.01.2024 JP 2024012128
(71) Applicant: Daicel Corporation, Osaka-shi, Osaka 530-0011 (JP)
(72) Inventor: SAKATA, Yumi, Tokyo 108-8230 (JP); SEKI, Yoshie, Tokyo 108-8230 (JP); WATANABE, Megumi, Tokyo 108-8230 (JP)
(74) Representative: Grünecker Patent- und Rechtsanwälte PartG mbB
(86) International application number: PCT/JP2024/030512
(87) International publication number: WO 2025/163951

(57) **Abstract**

A method for recovering a noble metal includes contacting a liquid composition containing a noble metal with an adsorbent to allow the noble metal in the liquid composition to be adsorbed by the adsorbent, thereby recovering the noble metal. The liquid composition further contains water and an oxidizing agent-derived substance. The amount of water in the liquid composition is 85 mass% or more with respect to the total amount of the liquid composition. The liquid composition for adsorption used in the recovery method includes water, an oxidizing agent-derived substance, and a noble metal. The amount of the water is 85 mass% or more with respect to the total amount of the liquid composition for adsorption.

## Description

### Technical Field

The present disclosure relates to a method for recovering a noble metal. Specifically, the present disclosure relates to a method for recovering a noble metal using an adsorbent, and a liquid composition for adsorption used in the recovery method.

### Background Art

In recent years, many electric and electronic devices such as portable phones have been used and discarded. Various metals such as noble metals and rare metals are used in these electric and electronic devices. For this reason, the discarded electric and electronic devices are called "urban mines" for collecting noble metals and are attracting attention. In particular, gold (Au) is a material of a bonding wire for connecting an electrode of an IC chip to a lead frame, and is used in a large amount. Therefore, a technique for efficiently recovering gold from an urban mine is required.

To recover noble metals from used equipment such as urban mines, it is necessary to first elute the noble metals in the used equipment using a metal dissolving solution. In recent years, as a solvent for dissolving gold (metal dissolving solution), "organic aqua regia" containing an organic solvent and copper halide has been known. In the organic aqua regia, the copper halide as an oxidizing agent contributes to the dissolution of gold. A method, in which gold contained in used electric and electronic devices is eluted into the organic aqua regia, and then the gold in the solution is recovered, has been proposed. In addition, an "etching liquid" composed of an organic solvent and a halogen as a simple substance is known for etching a semiconductor or the like containing a noble metal. In this etching liquid, iodine as an oxidizing agent contributes to the dissolution of gold.

For example, JP 6196662 B (Patent Document 1) proposes a method for recovering gold, including: dissolving gold in a solvent system containing a copper halide and an aprotic polar solvent, and adding a reducing agent to the solvent system with gold dissolved therein to precipitate a noble metal. JP H02-310326 A (Patent Document 2) discloses a technique in which a porous granular resin is impregnated with dibutyl carbitol or methyl isobutyl ketone as an organic solvent, and then a hydrochloric acid solution containing gold is allowed to pass through the porous granular resin layer to selectively extract gold into dibutyl carbitol or methyl isobutyl ketone. JP 2002-194450 A (Patent Document 3) proposes a method for selectively adsorbing a platinum group noble metal from an organic solvent solution using an adsorbent containing nicotinamide as an active ingredient. JP 2004-211142 A (Patent Document 4) discloses an iodine-based etching liquid containing an organic solvent miscible with water.

### Citation List

### Patent Document

Patent Document 1: JP 6196662 B
Patent Document 2: JP H02-310326 A
Patent Document 3: JP 2002-194450 A
Patent Document 4: JP 2004-211142 A

### Summary of Invention

### Technical Problem

In Patent Document 1, a solvent system containing copper halide is used for dissolving gold. Thus, in recovering gold, there is a concern that another metal (copper) may be mixed. Furthermore, Patent Document 1 fails to disclose a finding that gold dissolved in an organic solvent system is recovered by an adsorbent. In the technique disclosed in Patent Document 2, re-extraction with a dilute acid is required for recovering gold extracted into a metal extraction material, which requires time and labor. Nicotinamide, an active ingredient of Patent Document 3, is itself soluble in an organic solvent, and therefore needs to be supported on an insoluble carrier such as activated carbon. Although nicotinamide has excellent selectivity for platinum group noble metals, it cannot be applied to the recovery of gold. Patent Document 4 fails to disclose recovery of a dissolved noble metal.

An object of the present disclosure is to provide a method for recovering a noble metal that can efficiently adsorb and recover a dissolved noble metal by an adsorbent. Another object of the present disclosure is to provide a liquid composition for adsorption that contains a dissolved noble metal and that has a high recovery efficiency by an adsorbent.

### Solution to Problem

A method for recovering a noble metal according to the present disclosure includes contacting a liquid composition containing a noble metal with an adsorbent to allow the noble metal in the liquid composition to be adsorbed by the adsorbent, thereby recovering the noble metal. The liquid composition further contains water and an oxidizing agent-derived substance. The amount of water in the liquid composition is 85 mass% or more with respect to the total amount of the liquid composition.

The liquid composition for adsorption according to the present disclosure is used in the method for recovering a noble metal described above. The liquid composition for adsorption contains water, an oxidizing agent-derived substance, and a noble metal. The amount of the water is 85 mass% or more with respect to the total amount of the liquid composition for adsorption.

A method for producing the liquid composition for adsorption described above includes dissolving a noble metal in a metal dissolving solution containing water and an oxidizing agent to obtain a liquid composition for adsorption. The amount of water in the liquid composition for adsorption is 85 mass% or more with respect to the total amount of the liquid composition for adsorption.

The method for producing the liquid composition for adsorption described above may include adding water to a noble metal-containing liquid containing an oxidizing agent-derived substance and a noble metal to obtain a liquid composition for adsorption. The amount of water in the liquid composition for adsorption is 85 mass% or more with respect to the total amount of the liquid composition for adsorption.

### Advantageous Effects of Invention

With the method for recovering a noble metal according to the present disclosure, it is possible to efficiently adsorb and recover a dissolved noble metal by an adsorbent. The noble metal contained in the liquid composition for adsorption according to the present disclosure has a high adsorption percentage by the adsorbent. The liquid composition for adsorption can be easily produced by reducing the usage amount of an organic solvent having a high environmental load to the utmost without using a mineral acid.

### Description of Embodiments

Hereinafter, an example of a preferred embodiment will be specifically described. Each of the configurations, combinations thereof, and the like in each of the embodiments is an example, and additions, omissions, substitutions, and other changes of the configurations may be made as appropriate without departing from the spirit of the present disclosure. The present disclosure is not limited by the embodiments and is limited only by the claims. Each aspect disclosed in the present specification can be combined with any other feature disclosed herein.

The numerical range of each element disclosed in the present specification can be freely combined with the numerical range of another element. For example, the limitation of the numerical range of a degree of acetyl substitution of a cellulose resin can be combined with the limitation of the numerical range of a molecular weight. The numerical range of each element disclosed in the present specification may be a range obtained by freely combining the upper limit value and the lower limit value thereof.

In the present specification, "from X to Y" indicating a range means "X or more and Y or less"; "ppm" means "mass ppm"; and "%" means "mass% (wt.%)". In addition, the "mass%" refers to so-called weight percent, and does not mean mass concentration. In addition, "X' and/or Y'" has the same meaning as "at least one selected from the group consisting of X' and Y', and means to include all of [1] to [3] of "[1] only X', [2] only Y', [3] both X' and Y'. In the present specification, all test temperatures are room temperatures (20°C ± 5°C) unless otherwise noted.

### Method for recovering noble metal

The present disclosure relates to a technique for recovering a noble metal from a liquid composition containing a dissolved noble metal using an adsorbent. The present inventors have found that the amount of water in a liquid composition containing a noble metal greatly affects the adsorption efficiency of the noble metal by an adsorbent, and have completed the technique of the present disclosure.

That is, the method for recovering a noble metal according to the present disclosure includes contacting a liquid composition containing a noble metal with an adsorbent to allow the noble metal in the liquid composition to be adsorbed by the adsorbent, thereby recovering the noble metal. The liquid composition further contains water and an oxidizing agent-derived substance. In this recovery method, the amount of water in the liquid composition is 85 mass% or more with respect to the total amount of the liquid composition. In the method for recovering a noble metal in the present disclosure, when the amount of water contained in the liquid composition is 85 mass% or more with respect to the total amount of the liquid composition, the adsorption of the noble metal on the adsorbent is promoted. According to the method for recovering a noble metal in the present disclosure, a noble metal can be efficiently recovered by a simple method in which an adsorbent is added to a liquid composition containing a dissolved noble metal.

### Liquid composition for adsorption

The liquid composition for adsorption of the present disclosure is a liquid composition used in the method for recovering a noble metal described above, and means a liquid composition at the time of being contacted with the adsorbent. In the present specification, the term "liquid composition" and the term "liquid composition for adsorption" are used in the same meaning unless otherwise specified.

The liquid composition for adsorption of the present disclosure contains a dissolved noble metal, water, and an oxidizing agent-derived substance. The amount of water contained in the liquid composition for adsorption is 85 mass% or more with respect to the total amount of the liquid composition for adsorption. When the liquid composition for adsorption that contains 85 mass% of water with respect to the total amount of the liquid composition for adsorption is contacted with an adsorbent, the noble metal in the liquid composition for adsorption is adsorbed by the adsorbent.

From the viewpoint of improving the adsorption percentage of the noble metal, the amount of water in the liquid composition may be more than 85 mass% and less than 100 mass%, may be from 88 mass% to 99 mass%, may be from 90 mass% to 98 mass%, may be from 92 mass% to 97 mass%, or may be from 94 mass% to 96 mass%, with respect to the total amount of the liquid composition.

From the viewpoint of improving the adsorption percentage of the noble metal, the method for recovering a noble metal may further include adjusting the amount of water in the liquid composition to 85 mass% or more with respect to the total amount of the liquid composition before the contacting with the adsorbent. For example, the amount of water in the liquid composition can be adjusted to 85 mass% or more by dissolving the noble metal in a metal dissolving solution described later and then adding water thereto.

In other words, the method for recovering a noble metal according to one embodiment of the present disclosure includes: (1) dissolving a noble metal in a metal dissolving solution to obtain a composition containing the metal dissolving solution and dissolved gold; (2) adding water to the composition to obtain a liquid composition containing water in an amount of 85 mass% or more; and (3) contacting the liquid composition with an adsorbent to allow dissolved noble metal to be adsorbed by the adsorbent, thereby recovering the noble metal.

In another embodiment, the method for recovering a noble metal in the present disclosure may include: (1) dissolving a noble metal in a metal dissolving solution to obtain a composition containing the metal dissolving solution and dissolved gold; (2) adding water to the composition to obtain a liquid composition containing water in an amount of 85 mass% or more; (3) contacting the liquid composition with an adsorbent to allow dissolved noble metal to be adsorbed by the adsorbent, thereby obtaining a noble metal-containing adsorbent; and (4) separating the noble metal-containing adsorbent and the liquid composition to recover the noble metal in the noble metal-containing adsorbent.

Here, the "noble metal" means gold (Au), silver (Ag), platinum (Pt), palladium (Pd), iridium (Ir), rhodium (Rh), ruthenium (Ru), and osmium (Os). That is, a target in the method for recovering a noble metal in the present disclosure may be one or two or more selected from the group consisting of gold (Au), silver (Ag), platinum (Pt), palladium (Pd), iridium (Ir), rhodium (Rh), ruthenium (Ru), and osmium (Os). Appropriately selecting an adsorbent described later makes it possible to select and recover a noble metal to be recovered.

Preferably, the target in the method for recovering a noble metal in the present disclosure is gold (Au). That is, the liquid composition of the present disclosure may contain dissolved gold, water, and an oxidizing agent-derived substance. The amount of water in the liquid composition is 85 mass% or more with respect to the total amount of the liquid composition. The method for recovering gold, including contacting the liquid composition with an adsorbent to allow gold in the liquid composition to be adsorbed by the adsorbent, thereby recovering gold, is also included within the technical scope of the present disclosure.

The concentration of the noble metal in the liquid composition is not particularly limited, but for example, the concentration of the noble metal may be from 1 ppm to 2000 ppm, from 1 ppm to 1000 ppm, from 1 ppm to 500 ppm, from 1 ppm to 200 ppm, from 10 ppm to 2000 ppm, from 10 ppm to 1000 ppm, from 10 ppm to 500 ppm, from 10 ppm to 200 ppm, from 20 ppm to 2000 ppm, from 20 ppm to 1000 ppm, from 20 ppm to 500 ppm, or from 20 ppm to 200 ppm with respect to the total amount of the liquid composition.

### Oxidizing agent-derived substance

In the present specification, the "oxidizing agent-derived substance" means a substance generated by the deterioration or change of an oxidizing agent. In the present disclosure, the oxidizing agent-derived substance in the liquid composition may be a substance derived from an oxidizing agent in a metal dissolving solution for dissolving a noble metal, or may be a substance generated by deterioration or change in the process of dissolving a noble metal in a metal dissolving solution containing an oxidizing agent. Note that, the liquid composition may further contain the oxidizing agent itself as long as the effects of the present disclosure can be achieved.

Examples of the oxidizing agent that results in the oxidizing agent-derived substance include a halogen molecule (X₂, X = I, Br, Cl, or the like) such as an iodine molecule (I₂), a bromine molecule (Br₂), and a chlorine molecule (Cl₂). In other words, the oxidizing agent-derived substance in the liquid composition may be one or two or more selected from the group consisting of a substance derived from an iodine molecule (I₂), a substance derived from a bromine molecule (Br₂), and a substance derived from a chlorine molecule (Cl₂), preferably a substance derived from an iodine molecule (I₂) and/or a substance derived from a chlorine molecule (Cl₂), and more preferably a substance derived from an iodine molecule (I₂).

When the oxidizing agent-derived substance in the liquid composition is adsorbed by the adsorbent, adsorption of the noble metal to be recovered may be inhibited. From the viewpoint of improving the adsorption percentage of the noble metal, the content of the oxidizing agent-derived substance in the liquid composition may be from 0.01 mass% to 20 mass%, may be from 0.1 mass% to 18 mass%, may be from 0.5 mass% to 15 mass%, and may be from 1.0 mass% to 10 mass%, with respect to the total amount of the liquid composition.

### Other additives

When the liquid composition contains a substance derived from a halogen molecule (X₂, X = I, Br, Cl, or the like) as an oxidizing agent-derived substance, the liquid composition may further contain a substance derived from a halide. Preferably, the liquid composition contains a substance derived from a halide containing the same halogen as the halogen molecule. A preferable liquid composition contains a substance derived from an iodine molecule (I₂) and/or a substance derived from a chlorine molecule (Cl₂) as the oxidizing agent-derived substance, and further contains a substance derived from a halide containing the same halogen as the oxidizing agent-derived substance (that is, an iodine compound and/or a chlorine compound). Examples of the halide include an alkali metal halide, an alkaline earth metal halide, and an ammonium halide. Note that, in the present specification, "ammonium" means ammonium (NH₄⁺) and organic ammonium (quaternary ammonium, NR₄⁺, R = hydrocarbon group).

For example, the liquid composition may contain a substance derived from an iodine compound together with a substance derived from an iodine molecule (I₂) as an oxidizing agent. In other words, the oxidizing agent-derived substance in the liquid composition may be a substance derived from an iodine molecule (I₂), and the liquid composition may further contain a substance derived from an iodine compound. The iodine compound is preferably at least one selected from the group consisting of an alkali metal iodide, an alkaline earth metal iodide, and an ammonium iodide. Examples of the alkali metal iodide include lithium iodide (LiI), potassium iodide (KI), and sodium iodide (NaI). Examples of the alkaline earth metal iodide include calcium iodide (CaI₂), magnesium iodide (MgI₂), barium iodide (BaI₂), and strontium iodide (SrI₂). Examples of the ammonium iodide include ammonium iodide and tetrabutylammonium iodide.

In addition, the liquid composition may contain a substance derived from a chlorine compound together with a substance derived from a chlorine molecule (Cl₂) as an oxidizing agent. The chlorine compound is preferably at least one selected from the group consisting of an alkali metal chloride, an alkaline earth metal chloride, and an ammonium chloride. Examples of the alkali metal chloride include lithium chloride (LiCl), potassium chloride (KCl), sodium chloride (NaCl). Examples of the alkaline earth metal chlorides include calcium chloride (CaCl₂), magnesium chloride (MgCl₂), barium chloride (BaCl₂), and strontium chloride (SrCl₂). Examples of the ammonium chlorine include ammonium chloride and tetrabutylammonium chloride. The liquid composition may contain a substance derived from an iodine molecule (I₂) and a substance derived from a chlorine molecule (Cl₂), and a substance derived from an iodine compound and a substance derived from a chlorine compound.

When the liquid composition contains a substance derived from a halide, the content of the substance derived from a halide may be from 0.01 mass% to 20 mass%, from 0.1 mass% to 18 mass%, from 1.0 mass% to 15 mass%, or from 5.0 mass% to 10 mass%, with respect to the total amount of the liquid composition. In the liquid composition containing the substance derived from a halide in the above range, the adsorption of the noble metal by the adsorbent is not inhibited.

### Hydrophilic organic solvent

In the method for recovering a noble metal in the present disclosure, the liquid composition may or may not contain a hydrophilic organic solvent. Note that, in the present specification, the "organic solvent" means an organic compound that is liquid at normal temperature, and may be referred to as an "organic solvent". Here, the "liquid state" means a state having fluidity at normal temperature (from 15 to 35°C). Specifically, the organic solvent means an organic compound having fluidity at normal temperature and normal pressure (for example, from 15 to 35°C, 1 atm). The "hydrophilic organic solvent" means an organic solvent having a property of being miscible with water or a property of being dissolved in water.

The hydrophilic organic solvent contained in the liquid composition is preferably a polar solvent. It may be an aprotic polar solvent or a protic polar solvent.

From another viewpoint, the hydrophilic organic solvent may be an organic solvent having a heteroatom selected from the group consisting of a nitrogen atom (N), a sulfur atom (S), and an oxygen atom (O).

Specific examples of the hydrophilic organic solvent include N-methylpyrrolidone, acetonitrile, dimethyl sulfoxide (DMSO), dimethylformamide (DMF), acetone, tetrahydrofuran, propylene carbonate, methanol, ethanol, 2-propanol, n-butanol, tert-butyl alcohol, and benzyl alcohol. When the liquid composition contains the hydrophilic organic solvent, a preferable hydrophilic organic solvent is at least one selected from the group consisting of N-methylpyrrolidone, acetonitrile, and methanol, from the viewpoint of easily obtaining the effects of the present disclosure.

When the liquid composition contains the hydrophilic organic solvent, the content of the hydrophilic organic solvent may be more than 0 mass% and less than 15 mass%, may be from 1 mass% to 12 mass%, and may be from 5 mass% to 10 mass%, with respect to the total amount of the liquid composition, because the noble metal is more efficiently adsorbed by the adsorbent described below.

### Method for producing liquid composition for adsorption

In one embodiment, the liquid composition for adsorption of the present disclosure is produced by charging a material containing a noble metal into a metal dissolving solution containing water and an oxidizing agent to dissolve the noble metal in the material in the metal dissolving solution. The oxidizing agent in the metal dissolving solution contributes to dissolution of the noble metal. The oxidizing agent is deteriorated or changed in the process of dissolving the noble metal, thereby generating an oxidizing agent-derived substance. This makes it possible to obtain a liquid composition containing the dissolved noble metal, water, and the oxidizing agent-derived substance. In other words, the method for producing the liquid composition for adsorption of the present disclosure includes dissolving the noble metal in the metal dissolving solution containing water and the oxidizing agent to obtain the liquid composition for adsorption. The amount of water in the liquid composition for adsorption is 85 mass% or more with respect to the total amount of the liquid composition for adsorption.

Examples of the material containing a noble metal include used electronic and electronic devices, components thereof, processing waste of ornaments, and waste catalysts. In addition, a semiconductor in which gold is used as a material of a bonding wire for connecting an electrode of an IC chip to a lead frame can be used as the material containing gold.

As the oxidizing agent contained in the metal dissolving solution, the oxidizing agent described above for the liquid composition can be used. Preferable examples of the oxidizing agent include a halogen molecule (X₂, X = I, Br, Cl, or the like) such as an iodine molecule (I₂), a bromine molecule (Br₂), and a chlorine molecule (Cl₂). An iodine molecule (I₂) and/or a chlorine molecule (Cl₂) are more preferable, and an iodine molecule (I₂) is still more preferable.

The content of the oxidizing agent in the metal dissolving solution may be from 0.01 mass% to 20 mass%, from 0.01 mass% to 18 mass%, from 0.01 mass% to 15 mass%, from 0.01 mass% to 10 mass%, from 0.1 mass% to 20 mass%, from 0.1 mass% to 18 mass%, from 0.1 mass% to 15 mass%, from 0.1 mass% to 10 mass%, from 1.0 mass% to 20 mass%, from 1.0 mass% to 18 mass%, from 1.0 mass% to 15 mass%, or from 1.0 mass% to 10 mass% with respect to the total amount of the metal dissolving solution. The metal dissolving solution containing the oxidizing agent in the above range is easily used for dissolving the noble metal and offers excellent solubility.

The metal dissolving solution may contain a halide together with a halogen molecule (X₂, X = I, Br, Cl, or the like). In the metal dissolving solution containing the halide, halogen consumed as the oxidizing agent in dissolution of the noble metal is replenished. This maintains the solubility of the noble metal. The halides described above for the liquid composition can be used. A halide containing the same halogen as the halogen molecule serving as the oxidizing agent is preferable. In other words, a preferable metal dissolving solution contains, as an oxidizing agent, one or more halogen molecules selected from the group consisting of an iodine molecule (I₂), a bromine molecule (Br₂), and a chlorine molecule (Cl₂), and further contains a halide containing the same halogen as the oxidizing agent. The halides described above for the liquid composition are used.

For example, when the metal dissolving solution contains an iodine molecule (I₂) as the oxidizing agent, a metal dissolving solution further containing an iodine compound is preferable. The iodine compounds described above for the liquid composition can be used. A preferable iodine compound is at least one selected from the group consisting of an alkali metal iodide, an alkaline earth metal iodide, and an ammonium iodide. In addition, when the metal dissolving solution contains a chlorine molecule (Cl₂) as the oxidizing agent, a metal dissolving solution further containing a chlorine compound is preferable. The chlorine compounds described above for the liquid composition can be used. A preferable chlorine compound is at least one selected from the group consisting of an alkali metal chloride, an alkaline earth metal chloride, and an ammonium chloride. The metal dissolving solution contains an iodine molecule (I₂) and a chlorine molecule (Cl₂) as the oxidizing agent, and may further contain an iodine compound and a chlorine compound.

When the metal dissolving solution contains a halide, the content of the halide may be from 0.01 mass% to 20 mass%, from 0.01 mass% to 18 mass%, from 0.01 mass% to 15 mass%, from 0.01 mass% to 10 mass%, from 0.1 mass% to 20 mass%, from 0.1 mass% to 18 mass%, from 0.1 mass% to 15 mass%, from 0.1 mass% to 10 mass%, from 1.0 mass% to 20 mass%, from 1.0 mass% to 18 mass%, from 1.0 mass% to 15 mass%, from 1.0 mass% to 10 mass%, from 5.0 mass% to 20 mass%, from 5.0 mass% to 18 mass%, from 5.0 mass% to 15 mass%, or from 5.0 mass% to 10 mass% with respect to the total amount of the metal dissolving solution. In the metal dissolving solution containing the halide in the above range, excellent solubility of a noble metal is maintained for a long period of time.

From the viewpoint of excellent solubility of the noble metal, the amount of water in the metal dissolving solution may be more than 0 mass% and 85 mass% or less, from 1 mass% to 80 mass% or less, from 5 mass% to 70 mass%, or from 10 mass% to 55 mass%, with respect to the total amount of the metal dissolving solution.

The metal dissolving solution may or may not further contain a hydrophilic organic solvent. When the metal dissolving solution contains a hydrophilic organic solvent, the hydrophilic organic solvents described above for the liquid composition can be used. A preferable hydrophilic organic solvent is at least one selected from the group consisting of N-methylpyrrolidone, acetonitrile, and methanol.

When the metal dissolving solution contains a hydrophilic organic solvent, the content of the hydrophilic organic solvent in the metal dissolving solution may be more than 0 mass% and less than 99 mass%, from 1 mass% to 98 mass%, from 5 mass% to 97 mass%, from 5 mass% to 95 mass%, from 5 mass% to 90 mass%, from 5 mass% to 80 mass%, from 10 mass% to 98 mass%, from 10 mass% to 97 mass%, from 10 mass% to 95 mass%, from 10 mass% to 90 mass%, from 10 mass% to 80 mass%, from 20 mass% to 98 mass%, from 20 mass% to 97 mass%, from 20 mass% to 95 mass%, from 20 mass% to 90 mass%, from 20 mass% to 80 mass%, from 25 mass% to 98 mass%, from 25 mass% to 97 mass%, from 25 mass% to 95 mass%, from 25 mass% to 90 mass%, from 25 mass% to 80 mass%, from 30 mass% to 98 mass%, from 30 mass% to 97 mass%, from 30 mass% to 95 mass%, from 30 mass% to 90 mass%, or from 30 mass% to 80 mass% with respect to the total amount of the metal dissolving solution. The metal dissolving solution containing the hydrophilic organic solvent in the above range offers excellent solubility of a noble metal.

In another embodiment, a liquid composition containing 85 mass% or more of water with respect to the total amount of the liquid composition may be produced by adding water to a noble metal-containing liquid containing an oxidizing agent-derived substance and a noble metal. The noble metal-containing liquid may be obtained by charging a material containing a noble metal into a metal dissolving solution containing an oxidizing agent to dissolve, in the metal dissolving solution, the noble metal in the material. In other words, the method for producing the liquid composition for adsorption of the present disclosure includes adding water to the noble metal-containing liquid containing the oxidizing agent-derived substance to obtain the liquid composition for adsorption. Specifically, the method for producing the liquid composition for adsorption of the present disclosure includes: dissolving a noble metal in a metal dissolving solution containing an oxidizing agent to obtain a noble metal-containing liquid containing an oxidizing agent-derived substance; and adding water to the noble metal-containing liquid to obtain a liquid composition for adsorption.

Examples of the oxidizing agent-derived substance contained in the noble metal-containing liquid include the oxidizing agent-derived substances described above for the liquid composition. Preferable examples of the oxidizing agent-derived substance include substances derived from a halogen molecule (X₂, X = I, Br, Cl, or the like) such as an iodine molecule (I₂), a bromine molecule (Br₂), and a chlorine molecule (Cl₂). Substances derived from an iodine molecule (I₂) and/or a chlorine molecule (Cl₂) are more preferable, and substances derived from an iodine molecule (I₂) are still more preferable.

The content of the oxidizing agent-derived substance in the noble metal-containing liquid may be from 0.01 mass% to 20 mass%, may be from 0.1 mass% to 18 mass%, may be from 0.5 mass% to 15 mass%, and may be from 1.0 mass% to 10 mass%, with respect to the total amount of the noble metal-containing liquid.

The noble metal-containing liquid may contain a substance derived from the halide described above for the liquid composition, together with a substance derived from a halogen molecule (X₂, X = I, Br, Cl, or the like). Preferably, the noble metal-containing liquid contains a substance derived from an iodine molecule (I₂) and/or a substance derived from a chlorine molecule (Cl₂) as the oxidizing agent-derived substance, and further contains a substance derived from a halide containing the same halogen as the oxidizing agent-derived substance (that is, an iodine compound and/or a chlorine compound). For example, the noble metal-containing liquid contains a substance derived from an iodine compound together with a substance derived from an iodine molecule (I₂). The iodine compounds described above for the liquid composition can be used. A preferable iodine compound is at least one selected from the group consisting of an alkali metal iodide, an alkaline earth metal iodide, and an ammonium iodide. The noble metal-containing liquid may further contain a substance derived from a chlorine compound together with a substance derived from a chlorine molecule (Cl₂). The chlorine compounds described above for the liquid composition can be used. A preferable chlorine compound is at least one selected from the group consisting of an alkali metal chloride, an alkaline earth metal chloride, and an ammonium chloride. The noble metal-containing liquid contains a substance derived from an iodine molecule (I₂) and a substance derived from a chlorine molecule (Cl₂), and may further contain a substance derived from an iodine compound and a substance derived from a chlorine compound.

When the noble metal-containing liquid contains a substance derived from a halide, the content of the substance derived from a halide may be from 0.01 mass% to 20 mass%, from 0.1 mass% to 18 mass%, from 1.0 mass% to 15 mass%, or from 5.0 mass% to 10 mass%, with respect to the total amount of the noble metal-containing liquid.

The noble metal-containing liquid may or may not contain water. When the noble metal-containing liquid contains water, the amount of water in the noble metal-containing liquid may be more than 0 mass% and 85 mass% or less, from 1 mass% to 80 mass% or less, from 5 mass% to 70 mass%, or from 10 mass% to 55 mass%, with respect to the total amount of the noble metal-containing liquid.

The noble metal-containing liquid may or may not further contain a hydrophilic organic solvent. When the noble metal-containing liquid contains a hydrophilic organic solvent, the hydrophilic organic solvents described above for the liquid composition can be used. A preferable hydrophilic organic solvent is at least one selected from the group consisting of N-methylpyrrolidone, acetonitrile, and methanol.

When the noble metal-containing liquid contains a hydrophilic organic solvent, the content of the hydrophilic organic solvent in the noble metal-containing liquid may be more than 0 mass% and less than 99 mass%, from 1 mass% to 98 mass%, from 5 mass% to 97 mass%, from 10 mass% to 95 mass%, from 20 mass% to 90 mass%, and from 25 mass% to 80 mass%, with respect to the total amount of the noble metal-containing liquid.

### Adsorbent

In the method for recovering a noble metal in the present disclosure, the liquid composition containing dissolved noble metal can be contacted with an adsorbent, to allow dissolved noble metal in the liquid composition to be adsorbed by the adsorbent. As a method for contacting the liquid composition with the adsorbent, for example, the adsorbent may be charged into the liquid composition to be mixed, or the liquid composition may be allowed to pass through a cartridge (for example, column) packed with the adsorbent. In other words, the adsorbent of the present disclosure and the cartridge including the adsorbent are used in the method for recovering a noble metal described above. Here, the cartridge means a container that can accommodate an adsorbent and allows a liquid to pass therethrough. A cylindrical container is usually referred to as a column. In still other words, the adsorbent according to the present disclosure is an adsorbent for recovering a noble metal, which is to be contacted with a liquid composition containing a noble metal to adsorb the noble metal in the liquid composition, the liquid composition further contains water and an oxidizing agent-derived substance, and the amount of water in the liquid composition is 85 mass% or more with respect to the total amount of the liquid composition. All of the noble metal dissolved in the liquid composition may be adsorbed by the adsorbent, a part of the noble metal in the liquid composition may be adsorbed by the adsorbent, or the noble metal not adsorbed by the adsorbent may remain in the liquid composition.

The type of adsorbent is not particularly limited, and an adsorbent capable of adsorbing a noble metal in the liquid composition described above can be appropriately selected and used. An adsorbent capable of selectively adsorbing gold is preferable. In the present disclosure, the adsorbent is usually solid and is preferably porous. The adsorbent in various forms such as powder, granule, and fiber can be used.

From the viewpoint of high adsorption efficiency of a noble metal, the preferable material of the adsorbent is at least one selected from the group consisting of cellulose derivatives, ion exchange resins, and activated carbon. As the material of the adsorbent, a cellulose derivative is more preferable.

In the present specification, the "cellulose derivative" is defined as a generic term for compounds in which various substituents are introduced into at least some of the hydroxyl groups in cellulose. A preferable cellulose derivative is a cellulose ester in which at least some of the hydroxyl groups in cellulose are esterified. A cellulose ester having a total degree of substitution of 0.8 or more and 2.9 or less is more preferable. From the viewpoint of being capable of selectively adsorbing gold, the total degree of substitution of the cellulose ester may be from 0.8 to 2.9, from 1.0 to 2.9, from 1.2 to 2.9, from 1.5 to 2.9, from 1.8 to 2.9, from 2.0 to 2.9, from 2.3 to 2.9, from 0.8 to 2.8, from 1.0 to 2.8, from 1.2 to 2.8, from 1.5 to 2.8, from 1.8 to 2.8, from 2.0 to 2.8, from 2.3 to 2.8, from 0.8 to 2.7, from 1.0 to 2.7, from 1.2 to 2.7, from 1.5 to 2.7, from 1.8 to 2.7, from 2.0 to 2.7, or from 2.3 to 2.7. The total degree of substitution of the cellulose ester is the sum of degrees of substitution at the 2-, 3-, and 6-positions of the glucose ring of the cellulose ester, and can be measured by the NMR method according to, for example, the method of Tezuka (Tezuka, Carbonydr. Res. 273, 83 (1995)).

The cellulose derivative is preferably a cellulose acylate in which at least some of the hydroxyl groups in cellulose are substituted with acyl groups having from 2 to 40 carbon atoms. The acyl group of the cellulose ester may have from 2 to 30, from 2 to 20, from 2 to 10, from 2 to 5, or from 2 to 3 carbon atoms. From the viewpoint of being capable of selectively adsorbing gold, the degree of substitution of the cellulose acylate with an acyl group may be from 0.8 to 2.9, from 1.0 to 2.9, from 1.2 to 2.9, from 1.5 to 2.9, from 1.8 to 2.9, from 2.0 to 2.9, from 2.3 to 2.9, from 0.8 to 2.8, from 1.0 to 2.8, from 1.2 to 2.8, from 1.5 to 2.8, from 1.8 to 2.8, from 2.0 to 2.8, from 2.3 to 2.8, from 0.8 to 2.7, from 1.0 to 2.7, from 1.2 to 2.7, from 1.5 to 2.7, from 1.8 to 2.7, from 2.0 to 2.7, or from 2.3 to 2.7. The degree of substitution of the cellulose acylate with an acyl group is the sum of degrees of acyl substitution at the 2-, 3-, and 6-positions of the glucose ring of cellulose ester, and can be determined in the same manner as in the measurement method described above for the total degree of substitution of the cellulose derivative.

The cellulose derivative is preferably a cellulose acetate in which at least some of the hydroxyl groups in cellulose are substituted with acetyl groups. A cellulose acetate having a degree of acetyl substitution of 0.8 or more and 2.9 or less is more preferable. From the viewpoint of being capable of selectively adsorbing gold, the degree of acetyl substitution of the cellulose acetate may be from 0.8 to 2.9, from 1.0 to 2.9, from 1.2 to 2.9, from 1.5 to 2.9, from 1.8 to 2.9, from 2.0 to 2.9, from 2.3 to 2.9, from 0.8 to 2.8, from 1.0 to 2.8, from 1.2 to 2.8, from 1.5 to 2.8, from 1.8 to 2.8, from 2.0 to 2.8, from 2.3 to 2.8, from 0.8 to 2.7, from 1.0 to 2.7, from 1.2 to 2.7, from 1.5 to 2.7, from 1.8 to 2.7, from 2.0 to 2.7, or from 2.3 to 2.7. The degree of acetyl substitution of the cellulose ester is the sum of degrees of acetyl substitution at the 2-, 3-, and 6-positions of the glucose ring of cellulose ester, and can be determined in the same manner as in the measurement method described above for the total degree of substitution of the cellulose derivative.

When the material of the adsorbent is a cellulose acetate, the cellulose acetate may contain an additional substituent besides the acetyl group as long as the effects of the present disclosure are obtained. Examples of the additional substituent include acyl groups such as a propionyl group, a butyryl group, a pentanoyl (valeryl) group, a hexanoyl group, a heptanoyl group, an octanoyl group, a nonanoyl group, an undecanoyl group, a dodecanoyl group, a tridecanoyl group, a tetradecanoyl (myristoyl) group, a pentadecanoyl group, a hexadecanoyl group, a heptadecanoyl group, and an octadecanoyl (stearoyl) group.

In the present specification, the "ion exchange resin" is defined as a resin that is composed of a crosslinked polymer having an ion exchange group and contains a counter ion exchangeable with a target ion. The type of ion exchange resin may be any type as long as ion exchange can be performed in the presence of an organic solvent, and can be appropriately selected depending on the type of the target ion. Examples of the ion exchange resin include polyolefin, a (meth)acrylic resin, a styrene-based resin, polyacetal, polyester, polycarbonate, polyamide, polyamide-imide, polyimide, polyether, polyetherimide, polyetherketone, polyether ether ketone, polysulfone, polyethersulfone, polyphenylene sulfide, and a fluororesin, each having an ion exchange group. Examples of the ion exchange group include a sulfonate group, a carboxyl group, a phosphate group, a primary amino group, a secondary amino group, a tertiary amino group, and a quaternary ammonium group. In particular, an anion exchange resin capable of exchanging negative ions is preferable.

As used herein, "activated carbon" is defined as a material consisting essentially of carbon and having a plurality of pores on its surface. The type of activated carbon is not particularly limited, and known and commercially available activated carbons can be appropriately selected and used regardless of the origin, the activation method, the shape, and the like. For example, the activated carbon may be activated carbon of mineral origin, may be activated carbon of plant origin, may be activated carbon of resin origin, may be steam-activated carbon, or may be chemical-activated carbon. The form of the activated carbon may be appropriately selected from a powdery form, a granular form, a crushed form, a fibrous form, a honeycomb form, and the like.

When the activated carbon is selected as the material of the adsorbent, the specific surface area of the activated carbon is preferably from 200 to 3500 m²/g, more preferably from 400 to 2000 m²/g, and still more preferably from 800 to 2000 m²/g. The total pore volume of the activated carbon is preferably from 0.1 to 2 ml/g, more preferably from 0.2 to 1.6 ml/g, and still more preferably from 0.2 to 0.8 ml/g.

The amount of the adsorbent added can be appropriately selected depending on the type of adsorbent. From the viewpoint of being capable of efficiently adsorbing gold, the amount of the adsorbent added may be from 1 g/L to 1000 g/L, from 1 g/L to 500 g/L, from 1 g/L to 300 g/L, from 1 g/L to 200 g/L, from 1 g/L to 100 g/L, from 2 g/L to 1000 g/L, from 2 g/L to 500 g/L, from 2 g/L to 300 g/L, from 2 g/L to 200 g/L, from 2 g/L to 100 g/L, from 5 g/L to 1000 g/L, from 5 g/L to 500 g/L, from 5 g/L to 300 g/L, from 5 g/L to 200 g/L, from 5 g/L to 100 g/L, from 10 g/L to 1000 g/L, from 10 g/L to 500 g/L, from 10 g/L to 300 g/L, from 10 g/L to 200 g/L, from 10 g/L to 100 g/L, from 15 g/L to 1000 g/L, from 15 g/L to 500 g/L, from 15 g/L to 300 g/L, from 15 g/L to 200 g/L, or from 15 g/L to 100 g/L with respect to the composition.

In the method for recovering a noble metal in the present disclosure, when the adsorbent is contacted with the liquid composition, the dissolved noble metal in the liquid composition is preferentially adsorbed by the adsorbent in principle. However, in rare cases, substances other than the noble metal, derived from the oxidizing agent or the halide (for example, halogen ions such as chloride ions, halogen molecules, and the like) may be adsorbed. In this case, the adsorption of substances other than the noble metal in the liquid composition can be suppressed by allowing the target substance (an oxidizing agent-derived substance or a halide-derived substance) to be adsorbed by the adsorbent before contacting the adsorbent with the liquid composition. In other words, the method for recovering a noble metal according to the present disclosure may further include allowing the oxidizing agent-derived substance to be adsorbed by the adsorbent before contacting the liquid composition with the adsorbent, and may include allowing the oxidizing agent-derived substance and/or the halide-derived substance to be adsorbed by the adsorbent before contacting the liquid composition with the adsorbent.

By contacting the liquid composition with the adsorbent, a noble metal-containing adsorbent, in which the noble metal in the liquid composition is adsorbed, is obtained. By separating the noble metal gold-containing adsorbent from the liquid composition, the noble metal adsorbed by the noble metal-containing adsorbent can be recovered.

The method for separating the noble metal-containing adsorbent is not particularly limited, and a general solid-liquid separation method can be used. Examples of the solid-liquid separation method include filtration, centrifugation, and sedimentation.

As the method for recovering a noble metal from the noble metal-containing adsorbent, for example, the noble metal may be released from the noble metal-containing adsorbent using a desorption liquid and the noble metal eluted in the desorption liquid may be recovered, or the noble metal-containing adsorbent may be incinerated to recover the noble metal as an incineration residue. Examples of the method using the desorption liquid include a method of passing the desorption liquid through the noble metal-containing adsorbent packed in a cartridge (for example, a column), and a method of charging the noble metal-containing adsorbent into the desorption liquid and stirring.

The type of desorption liquid can be selected according to the type of adsorbent. For example, in the case of an adsorbent made of a cellulose derivative, a preferable desorption liquid is water, an aqueous sodium chloride solution, or the like.

### Applications

The method for recovering a noble metal and the liquid composition for adsorption in the present disclosure are used for recovering a noble metal from used electric and electronic devices and extracting a noble metal from ores, and the like, using an adsorbent. In addition, it can also be applied for recovery of a noble metal from an etching liquid used in a semiconductor production process.

### Examples

The present disclosure will be specifically described below with reference to examples, but the technical scope of the present disclosure is not limited by these examples. Unless otherwise specified, test temperatures are room temperatures.

### Example 1

### Preparation of metal dissolving solution

N-methylpyrrolidone (available from KANTO CHEMICAL CO., INC., weight percentage: 38%), iodine (I₂, available from KANTO CHEMICAL CO., INC., weight percentage: 3%), ammonium iodide (available from FUJIFILM Wako Pure Chemical Corporation, weight percentage: 7%), and water (weight percentage: 52%) were mixed to prepare a metal dissolving solution (1). The composition of the metal dissolving solution (1) is listed in Table 1 below.

A gold wire (φ = 0.20 mm, purity: 99.95%, available from The Nilaco Corporation) was added to and dissolved in the obtained metal dissolving solution (1), and then 900 parts by mass of water was added to 100 parts by mass of the metal dissolving solution (1) to obtain a liquid composition for adsorption (1) having an amount of water of 95.2 wt.% and a gold concentration of 89 ppm. The amount of water and the concentration of dissolved gold in the liquid composition for adsorption (1) are listed as "water (in liquid composition for adsorption)" and "initial gold concentration (M₁)", respectively, in Table 1 below.

### Adsorption test

An adsorbent A (cellulose acetate, degree of acetyl substitution: 2.5) was added to the obtained liquid composition for adsorption (1) to allow gold dissolved in the liquid composition for adsorption (1) to be adsorbed thereon. The amount of the adsorbent A added was 2 g (g/L) with respect to the liquid composition for adsorption (1). After stirring at room temperature for 3 hours, the adsorbent A on which gold had been adsorbed (gold-containing adsorbent) was subjected to solid-liquid separation, and the gold concentration in the liquid phase was measured. For the measurement of the gold concentration, an inductively coupled plasma optical emission spectrometer (product name "Agilent 5110", available from Agilent Technologies Japan, Ltd.) was used for the ICP emission spectrum. The gold adsorption percentage X (%) by the adsorbent was calculated by the following formula, where the gold concentration before adsorption was M₁ (ppm) and the gold concentration after adsorption was M₂ (ppm). The result is listed in Table 1 below as "gold adsorption percentage (%)".$X \left(wt%\right) = \left({M}_{1} \left(ppm\right) - {M}_{2} \left(ppm\right)\right) {/ M}_{1} \left(ppm\right) \times 100$

### Example 2

The adsorption test was performed in the same manner as in Example 1 except that the amount of the adsorbent and the gold concentration in the liquid composition for adsorption in the adsorption test were changed to those listed in Table 1 below. The composition of the metal dissolving solution and the results of the adsorption test are listed in Table 1 below. The amount of water and the concentration of dissolved gold in the liquid composition for adsorption (2) are listed as "water (in liquid composition for adsorption)" and "initial gold concentration (M₁)", respectively, in Table 1 below.

### Examples 3 and 4

The adsorption test was performed in the same manner as in Example 1 except that the composition of the metal dissolving solution was changed to those listed in Table 1 below. The composition of the metal dissolving solution and the results of the adsorption test are listed in Table 1 below. The amounts of water and the concentrations of dissolved gold in the liquid compositions for adsorption (3) and (4) are listed as "water (in liquid composition for adsorption)" and "initial gold concentration (M₁)", respectively, in Table 1 below.

### Example 5

Iodine (I₂, available from KANTO CHEMICAL CO., INC., weight percentage: 5%), ammonium iodide (available from FUJIFILM Wako Pure Chemical Corporation, weight percentage: 10%), and water (weight percentage: 85%) were mixed to prepare a metal dissolving solution (5). The composition of the metal dissolving solution (5) is listed in Table 1 below.

A gold wire (φ = 0.20 mm, purity: 99.95%, available from The Nilaco Corporation) was added to and dissolved in the obtained metal dissolving solution (5), to obtain a liquid composition for adsorption (5) having an amount of water of 85 wt.% and a gold concentration of 190 ppm. The amount of water and the concentration of dissolved gold in the liquid composition for adsorption (5) are listed as "water (in liquid composition for adsorption)" and "initial gold concentration (M₁)", respectively, in Table 1 below.

The adsorbent A (cellulose acetate, degree of acetyl substitution: 2.5) was added to the obtained liquid composition for adsorption (5) to allow gold dissolved in the liquid composition for adsorption (5) to be adsorbed thereon. The amount of the adsorbent A added was 20 g (g/L) with respect to the composition for adsorption (1). After stirring at room temperature for 3 hours, the adsorbent A on which gold had been adsorbed (gold-containing adsorbent) was subjected to solid-liquid separation, and the gold adsorption percentage by the adsorbent was determined by the method described in Example 1. The obtained result is listed in Table 1 below as "gold adsorption percentage (%)".

### Comparative Example 1

N-methylpyrrolidone (available from KANTO CHEMICAL CO., INC., weight percentage: 38%), iodine (I₂, available from KANTO CHEMICAL CO., INC., weight percentage: 3%), ammonium iodide (available from FUJIFILM Wako Pure Chemical Corporation, weight percentage: 7%), and water (weight percentage: 52%) were mixed to prepare a metal dissolving solution (C1). The composition of the metal dissolving solution is listed in Table 1 below.

A gold wire (φ = 0.20 mm, purity: 99.95%, available from The Nilaco Corporation) was added to and dissolved in the obtained metal dissolving solution (C1), to obtain a liquid composition for adsorption (C1) having an amount of water of 52 wt.% and a gold concentration of 1600 ppm. The amount of water and the concentration of dissolved gold in the liquid composition for adsorption (C1) are listed as "water (in liquid composition for adsorption)" and "initial gold concentration (M₁)", respectively, in Table 1 below.

The adsorption test was performed in the same manner as in Example 1 except that the obtained liquid composition for adsorption (C1) was used. The obtained results are listed in Table 1 below. In the adsorption test of Comparative Example 1, gold could not be recovered by the adsorbent.

### Comparative Examples 2 and 3

After gold was dissolved in the metal dissolving solution in the same manner as in Comparative Example 1, water in each amount listed in Table 1 was added to 100 parts by mass of the metal dissolving solution, to obtain a liquid composition for adsorption (C2) having an amount of water of 84 wt.% and a gold concentration of 533 ppm and a liquid composition for adsorption (C3) having an amount of water of 70 wt.% and a gold concentration of 1000 ppm.

The adsorption test was performed in the same manner as in Comparative Example 1 except that the liquid compositions for adsorption (C2) and (C3) were each used instead of the liquid composition for adsorption (C1). The composition of the metal dissolving solution and the results of the adsorption test are listed in Table 1 below. The amounts of water and the concentrations of dissolved gold in the liquid compositions for adsorption (C2) and (C3) are listed as "water (in liquid composition for adsorption)" and "initial gold concentration (M₁)", respectively, in Table 1 below. In both Comparative Examples 2 and 3, gold could not be recovered by the adsorbent.

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| Metal dissolving solution | | | | | | | | | |
| Organic Solvent | | | | | | | | | |
| N-methylpyrrolidone | [wt%] | 38 | 38 | 80 | 16 | 0 | 38 | 38 | 38 |
| Oxidizing agent | | | | | | | | | |
| I₂ | [wt%] | 3 | 3 | 6 | 1 | 5 | 3 | 3 | 3 |
| Additional additive | | | | | | | | | |
| Ammonium iodide | [wt%] | 7 | 7 | 14 | 3 | 10 | 7 | 7 | 7 |
| Water | [wt%] | 52 | 52 | 0 | 80 | 85 | 52 | 52 | 52 |

| Adsorption conditions | | | | | | | | | |
|---|---|---|---|---|---|---|---|---|---|
| Adsorbent (cellulose acetate) | [g/L] | 2 | 20 | 2 | 2 | 20 | 2 | 2 | 2 |
| Number of adsorptions | [Number] | 1 | 1 | 1 | 1 | 1 | 1 | 1 | 1 |
| Metal dissolving solution | Part by mass | 100 | 100 | 100 | 100 | 100 | 100 | 100 | 100 |
| Amount of water added | Part by mass | 900 | 900 | 2000 | 100 | 0 | 0 | 200 | 60 |
| Water (in liquid composition for adsorption) | [wt%] | 95.2 | 95.2 | 95.2 | 90.0 | 85.0 | 52.0 | 84.0 | 70.0 |
| Initial gold concentration M₁ | [ppm] | 89 | 26 | 20 | 23 | 190 | 1600 | 533 | 1000 |

| Evaluation results | | | | | | | | | |
|---|---|---|---|---|---|---|---|---|---|
| Gold adsorption percentage | [%] | 2 | 23 | 2 | 3 | 17 | 0 | 0 | 0 |

As listed in Table 1, in Examples, in which the amounts of water in the liquid compositions for adsorption were 85 mass% or more, the dissolved noble metal could be efficiently recovered by the adsorbent. On the other hand, in Comparative Examples, in which the amounts of water were less than 85 mass%, the dissolved noble metal could not be recovered by the adsorbent. From these evaluation results, the superiority of the present disclosure is clear.

### [Disclosed items]

Each of the following items discloses a preferred embodiment.

### [Item 1]

A method for recovering a noble metal, the method including:
contacting a liquid composition containing a noble metal with an adsorbent to allow the noble metal in the liquid composition to be adsorbed by the adsorbent, thereby recovering the noble metal,
wherein the liquid composition further contains water and an oxidizing agent-derived substance, and
an amount of the water in the liquid composition is 85 mass% or more with respect to a total amount of the liquid composition.

### [Item 2]

The method for recovering a noble metal according to item 1, further including adjusting the amount of the water in the liquid composition to 85 mass% or more with respect to the total amount of the liquid composition before the contacting with the adsorbent.

### [Item 3]

The method for recovering a noble metal according to item 1 or 2, wherein the noble metal is gold.

### [Item 4]

The method for recovering a noble metal according to any one of items 1 to 3,
wherein the oxidizing agent-derived substance is a substance derived from an iodine molecule (I₂) and/or a substance derived from a chlorine molecule (Cl₂).

### [Item 5]

The method for recovering a noble metal according to any one of items 1 to 4,
wherein the oxidizing agent-derived substance is a substance derived from an iodine molecule (I₂) and/or a substance derived from a chlorine molecule (Cl₂), and
the liquid composition further contains a substance derived from a halide containing a same halogen as the oxidizing agent-derived substance.

### [Item 6]

The method for recovering a noble metal according to item 5, wherein the halide is at least one selected from the group consisting of an alkali metal halide, an alkaline earth metal halide, and an ammonium halide.

### [Item 7]

The method for recovering a noble metal according to any one of items 1 to 6, wherein a material of the adsorbent is at least one selected from the group consisting of a cellulose derivative, an ion exchange resin, and activated carbon.

### [Item 8]

The method for recovering a noble metal according to item 7, wherein the cellulose derivative is a cellulose ester having a total degree of substitution of 0.8 or more and 2.9 or less.

### [Item 9]

The method for recovering a noble metal according to item 7 or 8, wherein the cellulose derivative is a cellulose acetate in which at least some of hydroxyl groups in cellulose are substituted with acetyl groups.

### [Item 10]

The method for recovering a noble metal according to any one of items 1 to 9, wherein the liquid composition further contains a hydrophilic organic solvent.

### [Item 11]

The method for recovering a noble metal according to item 10, wherein the hydrophilic organic solvent is an organic solvent having a heteroatom.

### [Item 12]

The method for recovering a noble metal according to item 10 or 11, wherein the hydrophilic organic solvent is a polar solvent.

### [Item 13]

The method for recovering a noble metal according to any one of items 10 to 12, wherein the hydrophilic organic solvent is at least one selected from the group consisting of N-methylpyrrolidone, acetonitrile, and methanol.

### [Item 14]

An adsorbent used in the method for recovering a noble metal described in any one of items 1 to 13.

### [Item 15]

A cartridge including the adsorbent described in item 14.

### [Item 16]

A liquid composition for adsorption used in the method for recovering a noble metal described in any one of items 1 to 13, the liquid composition for adsorption containing:
water;
an oxidizing agent-derived substance; and
a noble metal,
wherein an amount of the water is 85 mass% or more with respect to a total amount of the liquid composition for adsorption.

### [Item 17]

The liquid composition for adsorption according to item 16, wherein the noble metal is gold.

### [Item 18]

The liquid composition for adsorption according to item 16 or 17,
wherein the oxidizing agent-derived substance is a substance derived from an iodine molecule (I₂) and/or a substance derived from a chlorine molecule (Cl₂).

### [Item 19]

The liquid composition for adsorption according to any one of items 16 to 18,
wherein the oxidizing agent-derived substance is a substance derived from an iodine molecule (I₂) and/or a substance derived from a chlorine molecule (Cl₂),
the liquid composition for adsorption further contains a substance derived from a halide containing a same halogen as the oxidizing agent-derived substance, and
the halide is at least one selected from the group consisting of an alkali metal halide, an alkaline earth metal halide, and an ammonium halide.

### [Item 20]

The liquid composition for adsorption according to any one of items 16 to 19, further containing a hydrophilic organic solvent,
wherein the hydrophilic organic solvent is at least one selected from the group consisting of N-methylpyrrolidone, acetonitrile, and methanol.

### [Item 21]

A method for producing the liquid composition for adsorption described in any one of items 16 to 20, the method including:
dissolving a noble metal in a metal dissolving solution containing water and an oxidizing agent to obtain a liquid composition for adsorption,
wherein an amount of the water in the liquid composition for adsorption is 85 mass% or more with respect to a total amount of the liquid composition for adsorption.

### [Item 22]

A method for producing the liquid composition for adsorption described in any one of items 16 to 20, the method including:
adding water to a noble metal-containing liquid containing an oxidizing agent-derived substance and a noble metal to obtain a liquid composition for adsorption,
wherein an amount of the water in the liquid composition for adsorption is 85 mass% or more with respect to a total amount of the liquid composition for adsorption.

### Industrial Applicability

The recovery method described above can be used for recovery of a noble metal from an etching liquid in addition to recovery of a noble metal from used equipment.

## Claims

1. A method for recovering a noble metal, the method comprising:
contacting a liquid composition containing a noble metal with an adsorbent to allow the noble metal in the liquid composition to be adsorbed by the adsorbent, thereby recovering the noble metal,
wherein the liquid composition further contains water and an oxidizing agent-derived substance, and
an amount of the water in the liquid composition is 85 mass% or more with respect to a total amount of the liquid composition.

2. The method for recovering a noble metal according to claim 1, further comprising adjusting the amount of the water in the liquid composition to 85 mass% or more with respect to the total amount of the liquid composition before the contacting with the adsorbent.

3. The method for recovering a noble metal according to claim 1, wherein the noble metal is gold.

4. The method for recovering a noble metal according to claim 1,
wherein the oxidizing agent-derived substance is a substance derived from an iodine molecule (I₂) and/or a substance derived from a chlorine molecule (Cl₂).

5. The method for recovering a noble metal according to claim 1,
wherein the oxidizing agent-derived substance is a substance derived from an iodine molecule (I₂) and/or a substance derived from a chlorine molecule (Cl₂), and
the liquid composition further contains a substance derived from a halide containing a same halogen as the oxidizing agent-derived substance.

6. The method for recovering a noble metal according to claim 5, wherein the halide is at least one selected from the group consisting of an alkali metal halide, an alkaline earth metal halide, and an ammonium halide.

7. The method for recovering a noble metal according to claim 1, wherein a material of the adsorbent is at least one selected from the group consisting of a cellulose derivative, an ion exchange resin, and activated carbon.

8. The method for recovering a noble metal according to claim 7, wherein the cellulose derivative is a cellulose ester having a total degree of substitution of 0.8 or more and 2.9 or less.

9. The method for recovering a noble metal according to claim 7, wherein the cellulose derivative is a cellulose acetate in which at least some of hydroxyl groups in cellulose are substituted with acetyl groups.

10. The method for recovering a noble metal according to claim 1, wherein the liquid composition further contains a hydrophilic organic solvent.

11. The method for recovering a noble metal according to claim 10, wherein the hydrophilic organic solvent is an organic solvent having a heteroatom.

12. The method for recovering a noble metal according to claim 10, wherein the hydrophilic organic solvent is a polar solvent.

13. The method for recovering a noble metal according to claim 10, wherein the hydrophilic organic solvent is at least one selected from the group consisting of N-methylpyrrolidone, acetonitrile, and methanol.

14. An adsorbent used in the method for recovering a noble metal described in claim 1.

15. A cartridge comprising the adsorbent described in claim 14.

16. A liquid composition for adsorption used in the method for recovering a noble metal described in claim 1, the liquid composition for adsorption comprising:
water;
an oxidizing agent-derived substance; and
a noble metal,
wherein an amount of the water is 85 mass% or more with respect to a total amount of the liquid composition for adsorption.

17. The liquid composition for adsorption according to claim 16, wherein the noble metal is gold.

18. The liquid composition for adsorption according to claim 16,
wherein the oxidizing agent-derived substance is a substance derived from an iodine molecule (I₂) and/or a substance derived from a chlorine molecule (Cl₂).

19. The liquid composition for adsorption according to claim 16,
wherein the oxidizing agent-derived substance is a substance derived from an iodine molecule (I₂) and/or a substance derived from a chlorine molecule (Cl₂),
the liquid composition for adsorption further contains a substance derived from a halide containing a same halogen as the oxidizing agent-derived substance, and
the halide is at least one selected from the group consisting of an alkali metal halide, an alkaline earth metal halide, and an ammonium halide.

20. The liquid composition for adsorption according to claim 16, further comprising a hydrophilic organic solvent,
wherein the hydrophilic organic solvent is at least one selected from the group consisting of N-methylpyrrolidone, acetonitrile, and methanol.

21. A method for producing the liquid composition for adsorption described in claim 16, the method comprising:
dissolving a noble metal in a metal dissolving solution containing water and an oxidizing agent to obtain a liquid composition for adsorption,
wherein an amount of the water in the liquid composition for adsorption is 85 mass% or more with respect to a total amount of the liquid composition for adsorption.

22. A method for producing the liquid composition for adsorption described in claim 16, the method comprising:
adding water to a noble metal-containing liquid containing an oxidizing agent-derived substance and a noble metal to obtain a liquid composition for adsorption,
wherein an amount of the water in the liquid composition for adsorption is 85 mass% or more with respect to a total amount of the liquid composition for adsorption.
